# EUROPÄISCHE PATENTSCHRIFT

(11) **EP 1 874 522 B1**
(45) Veröffentlichungstag und Bekanntmachung des Hinweises auf die Patenterteilung: **22.06.2011**
(21) Anmeldenummer: 05817982.1
(22) Anmeldetag: 24.11.2005
(51) Int. Cl.: B29C 47/32, B29C 47/92, B29C 47/50, B29C 47/14, B29C 47/88

(54) **VERWENDUNG EINER EXTRUSIONSANLAGE ZUR HERSTELLUNG EINER FOLIE AUS THERMOPLASTISCHEM KUNSTSTOFF, FOLIE UND VERWENDUNG DER FOLIE**
USE OF AN EXTRUSION DEVICE FOR PRODUCING A THERMOPLASTIC PLASTIC FILM, FILM AND USE THEREOF
UTILISATION D'UN DISPOSITIF D'EXTRUSION POUR LA FABRICATION D'UNE FEUILLE EN MATIERE THERMOPLASTIQUE, FEUILLE ET UTILISATION DE LA FEUILLE

(30) Priorität: 29.04.2005 DE 102005020424
(43) Veröffentlichungstag der Anmeldung: 09.01.2008
(73) Patentinhaber: Evonik Röhm GmbH, 64293 Darmstadt (DE)
(72) Erfinder: GUENATEN, Claude, 64291 Darmstadt (DE); STEINFELS, Christoph, 64331 Weiterstadt (DE); GROOTHUES, Herbert, 64331 Weiterstadt (DE); KROHMER, Christoph, 71159 Mötzingen (DE); HÄRING, Helmut, 64354 Reinheim (DE); BIRTH, Detlef, 64807 Dieburg (DE); NEUROTH, Christopher, 64846 Gross-Zimmern (DE); MEIER-KAISER, Michael, verstorben (DE); MEON, Walter, 64846 Gross-Zimmern (DE)
(86) Internationale Anmeldenummer: PCT/EP2005/012602
(87) Internationale Veröffentlichungsnummer: WO 2006/117018

(56) Entgegenhaltungen:
- EP-A- 1 202 261
- EP-A- 1 285 742
- EP-A- 1 422 043
- EP-A- 1 433 586
- EP-A2- 0 391 193
- EP-B- 0 547 562
- WO-A-95/04648
- DE-U1- 9 003 591
- GB-A- 1 170 640
- US-A- 3 422 494
- US-A- 4 693 677
- US-A1- 2002 114 922

## Beschreibung

Die Erfindung betrifft die Verwendung einer Extrusionsanlage zur Herstellung einer Folie aus thermoplastischen Kunststoff, eine Folie aus einem thermoplastischen Kunststoff und die Verwendung der Folie.

### Stand der Technik

EP 1 117 731 B1 beschreibt optisch nahezu isotrope Polycarbonat-Folien sowie ein Chill-Roll Verfahren zu ihrer Herstellung. Dabei wird der senkrecht nach unten aus der Extrusionsdüse austretende Schmelzefilm tangential, d.h. in einem Winkel zur Walzenoberfläche von 0°, an eine gekühlte Walze, die Chill-Roll-Walze, angelegt. Die Folien bestehen aus linearem oder verzweigtem Polycarbonat mit einem mittleren Molekulargewicht Mw von 10.000 bis 40.000. Erfindungsgemäße Folien können z. B. einen Schrumpf von <1 %/ <1 % (190 °C / 30 min Machine-direction (MD) / Traverse-direction (TD)) aufweisen. Bevorzugt weist die erfindungsgemäße Folie in keinem Bereich der Oberfläche eine Ablenkung linear polarisierten Lichts von größer als 2 Winkelminuten auf. Der Gangunterschied kann z. B. 31 nm betragen, die Doppelbrechung delta n 4 x 10⁻⁴. Im Zugversuch wird z. B. eine Reißdehnung nach ISO 527-3 MD/TD von 39 bzw. 35 % gemessen. Zur Vermeidung von Düsenlinien bzw. Extrusionsstreifen wird empfohlen, eine Extrusionsdüse zu verwenden, deren innere Oberfläche im Düsenlippenbereich eine Rautiefe nach DIN 4768 von 0,025 bis 0,002 aufweist. Dies kann durch ein Verchromen und Polieren erreicht werden.

EP 1 285 742 A2 beschreibt Folien für optische Anwendungen im Dickenbereich unter 100 µm mit einer geringen Phasendifferenz von nicht mehr als 10 nm, einer "optical axis deviation" von +/- 10 Winkelminuten und geringen Dickenschwankungen im Bereich von maximal 2,4 µm pro 2 cm in der Breite. Die Folien werden mittels eines Chill-Roll-Verfahrens hergestellt. Die günstigen Materialeigenschaften sollen insbesondere dadurch erreicht werden können, indem die Temperatur der Polymerschmelze nach dem Austritt aus der Extrusionsdüse bis zum Kontakt mit der Chill-Roll-Walze bei mindestens 30 °C oberhalb der Glastemperatur des Kunststoffs gehalten wird. Zu diesem Zweck kann der Weg vom Austritt aus der Extrusionsdüse und dem Aufsetzpunkt auf der Chill-Roll-Walze relativ kurz, z. B. im Bereich von z. B. 30 bis 150 mm, gewählt werden. Der austretende Schmelzefilm kann zudem mittels einer Einhausung thermisch abgeschirmt oder zusätzlich beheizt werden. Das Verfahren eignet sich für eine Vielzahl von Kunststoffen, insbesondere für Norbornen-Kunststoffe.

US 5,476,134 beschreibt mit Chrom-Nitriden beschichtete Strangpressen zur Herstellung von Teilen aus Aluminium-Eisen-Legierungen. Diese eignen sich insbesondere zur Reduzierung der Erosion der Strangpressenteile bei der Herstellung von Aluminium-Legierungen mit geringen Eisenanteilen unter 0,3 %.

EP 351 886 (Bayer AG) beschreibt ein Gieß- oder Extrusionsverfahren zur Herstellung von optisch einachsige, doppelbrechende Polycarbonat-Folien, die mittels eines Quarzheizstrahlers beheizt werden. Damit erreicht man eine Reduktion der unerwünschten Doppelbrechung auf nicht mehr störende Werte.

JP 8336883 beschreibt ein Verfahren zur Extrusion von Folien aus thermoplastischen Kunststoff, wobei eine Extrusionsdüse eingesetzt wird, bei der die Kanten der Austrittsöffnung einen Radius von 30 µm oder weniger bei einer Ungleichmäßigkeit von nicht mehr als +/- 20 % aufweisen. Die beschriebene Düsengeometrie wirkt insbesondere der Ausbildung von unerwünschten Ablagerungen entgegen.

JP 6335949 beschreibt ein Verfahren zur Extrusion von Folien aus thermoplastischem Kunststoff, bevorzugt z. B. Polyethersulfone, Polyphenylenoxide oder Polyetherketone, wobei eine Extrusionsdüse eingesetzt wird, bei der die Kanten der Austrittsöffnung einen Radius von 30 µm oder weniger bei einer Ungleichmäßigkeit von nicht mehr als +/- 20 % aufweisen. Die Extrusionsdüse kann aus Stahl oder Keramik bestehen. Beschichtungen mit Chrom, Nickel, Titan, Kupfer, Zink usw. können eventuelle Wechselwirkungen des Düsenmaterials mit den extrudierten Kunststoffmaterialien entgegenwirken. Die beschriebene Düsengeometrie wirkt insbesondere der Ausbildung von Düsenlinien entgegen.

JP 2002-028941 beschreibt ein Verfahren zur Herstellung von Folien aus Polyvinylalkohol, die als Polarisationsfilme verwendet werden können. Filme mit verminderten Dickenschwankungen können erhalten werden, wenn eine Extrusionsdüse eingesetzt wird, bei der die Kanten der Austrittsöffnung einen Radius von 200 µm oder weniger aufweisen.

JP 2003-267758 beschreibt ein Verfahren zur Beschichtung von optischen Fasern mit einer Kunststoffummantelung. Dabei wird eine Extrusionsdüse eingesetzt, bei der die Kanten der Austrittsöffnung einen Radius von 10 bis 30 µm aufweisen. Die beschriebene Düsengeometrie wirkt insbesondere der Ausbildung von Kunststoffablagerung im Bereich der Düsenkante entgegen, so dass das Verfahren nunmehr über einen längeren Produktionszeitraum störungsfrei betrieben werden kann. Ein weiterer Vorteil besteht darin, dass die Kunststoffbeschichtung geringere Dickenschwankungen aufweist.

EP 0 547 562 A1 beschreibt ein Verfahren zum Beschichten einer flächigen Bahn, die eine Walze umläuft, mit einer Beschichtungslösung. Dabei wird die Beschichtungslösung aus einer Breitschlitzdüse radial, d.h. in einem Winkel zur Walzenoberfläche von 90°, auf die zu beschichtende Bahn aufgetragen. Durch die Transportbewegung der Walze entsteht eine mehrschichtige Bahn. Durch den steilen Auftragswinkel wird der Effekt einer Drossel in Bezug auf die Menge der aufgetragenen Beschichtungslösung erzielt. Wenn der Abstand der Düse zur Walze oder der entsprechende Spalt zwischen Düse und Walze zu sehr vom Soll-Zustand abweicht, kann es zu Beeinträchtigungen der Oberflächenqualität der Mehrschichtbahn, z. B. zur Linien und Streifenbildung, kommen. Um die Reproduzierbarkeit und Genauigkeit des Verfahrens vorteilhaft zu beeinflussen, ist daher eine Abstandsmessung rechts und links der Beschichtungsdüse mit einem Regelkreis installiert. Weicht der Abstand zwischen der Austrittsöffnung der Beschichtungsdüse und der Walze vom Sollwert ab, wird die Position der Beschichtungsdüse zur Walze mittels eines Stellmittels entsprechend korrigiert.

EP 1 202 261 A1 optische Speichermedien. Unter anderen wird die vertikale Doppelbrechung von handelsüblichen, extrudierten, im Chill-Roll-Verfahren hergestellten Polycarbonat-Folien und von handelsüblichen, gegossenen Polycarbonat-Folien verglichen. Die extrudierten Folien weisen vertikale Doppelbrechungs-Werte von 0,00029 auf, die gegossenen Folien Werte von 0,00066.

US 3,422,494 beschreibt eine Vorrichtung zum Erhalt von Folien aus thermoplastischem Kunststoff mit gleichmäßiger Dickenverteilung. Die Vorrichtung umfasst eine Extrusionsdüse und eine temperierbare Walze, die in einem Walzenstuhl fixiert sind.

### Aufgabe und Lösung

Eine Reihe von Anwendungsgebieten für Kunststofffolien, insbesondere im Bereich optischer Datenträger, verlangen neben einer geringen optischen Doppelbrechung zunehmend weitere Verbesserungen bei der Oberflächenqualität der Folien. Insbesondere werden immer geringere Dickentoleranzen über große Flächen hinweg oder sogar über den gesamten Folienbereich nachgefragt.

EP 1 117 731 B1 und EP 1 285 742 A2 offenbaren bemerkenswerte Lösungen zur Herstellung von Folien mit extrem geringen Doppelbrechungseigenschaften im Bereich weniger Nanometer, die hohen Anforderungen im optischen Bereich genügen. Bei den Oberflächeneigenschaften können gemäß der Lehre der EP 1 117 731 B1 Folien hergestellt werden, die in keinem Bereich der Oberfläche eine Ablenkung linear polarisierten Lichts von größer als 2 Winkelminuten aufweisen. Gemäß der EP 1 285 742 A2 können Dickentoleranzen im Bereich von etwa 2,4 µm pro 2 cm in der Breite realisiert werden.

Es wurde als Aufgabe gesehen, eine Folie aus Kunststoff bereitzustellen, die zum einem extrem gute Doppelbrechungseigenschaften im Bereich der EP 1 117 731 B1 oder der EP 1 285 742 A2 aufweist und zum anderen eine nochmals verbesserte Oberflächenqualität erreicht. Die Folie sollte weiterhin nochmals geringere Dickentoleranzen über den gesamten Folienbereich aufweisen. Die verbesserte Oberflächenqualität und Dickentoleranzen sollen insbesondere hohen Anforderungen für optische Datenträger genügen und sollen sich deshalb auf eine Spezifikation innerhalb einer kreisrunden Fläche mit einem Durchmesser von 12 cm beziehen.

### Die Aufgabe wird gelöst durch die

Verwendung einer Extrusionsanlage zur Herstellung einer Folie aus thermoplastischem Kunststoff, wobei der thermoplastische Kunststoff auf einer Extrusionsanlage, enthaltend einen Extruder, eine Extrusionsdüse mit einer Austrittsöffnung in Breitschlitzform und eine Chill-Roll-Walze, die an einem Walzenstuhl befestigt ist, geschmolzen und gefördert wird und in Form einer flächigen Schmelzebahn aus der Austrittsöffnung der Extrusionsdüse austritt, die Schmelzebahn an die Chill-Roll-Walze angelegt und gekühlt wird,
dadurch gekennzeichnet, dass
eine Extrusionsanlage eingesetzt wird, bei der der Abstand zwischen der Austrittsöffnung der Extrusionsdüse und der Oberfläche der Chill-Roll-Walze im Betriebszustand um nicht mehr als +/- 50 µm variiert.

Ferner wird die obenstehende Aufgabe gemäß der Erfindung durch eine Folie nach Patentanspruch 15 sowie durch die Verwendung dieser Folie gelöst. Vorteilhafte Weiterbildungen der Erfindung sind Gegenstand der betreffenden abhängigen Ansprüche.

### Figuren

Die Erfindung wird durch die folgenden Figuren näher erläutert, soll aber nicht auf diese Ausführungsformen beschränkt sein.

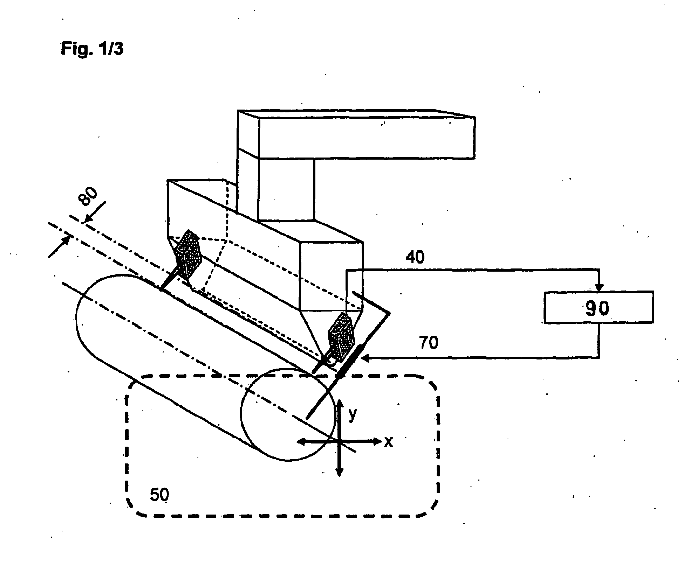

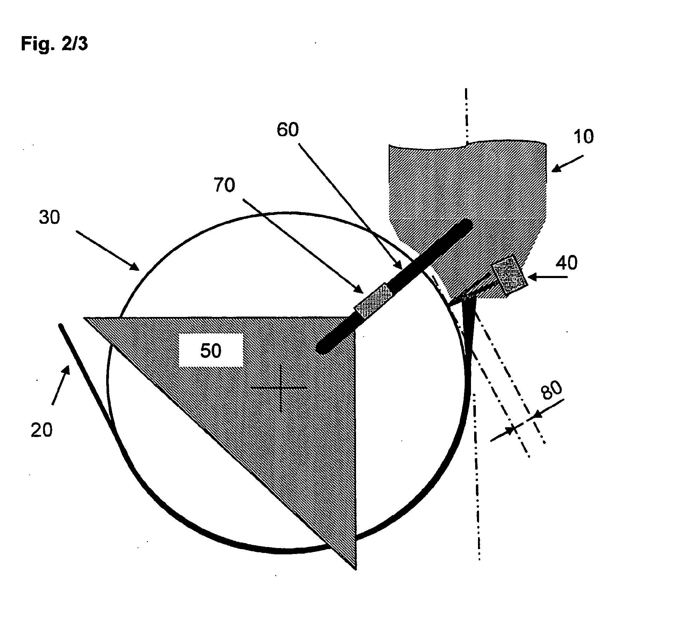

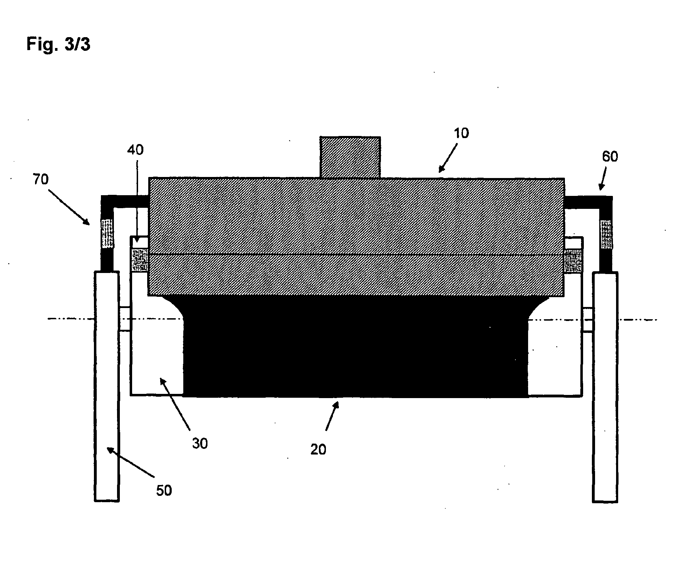

Fig 1/3: Schematische, schräg seitliche Ansicht einer erfindungsgemäßen Extrusionsanlage.
Fit. 2/3: Schematische Ansicht einer erfindungsgemäßen Extrusionsanlage von der Seite (quer zur Extrusionsrichtung)
Fig 3/3: Schematische Ansicht einer erfindungsgemäßen Extrusionsanlage von Vorne

### Bezugszeichenliste:

10 = Extrusionsdüse
20 = Schmelzefilm / Folie
30 = Chill-Roll-Walze
40 = Abstandmesssensor
50 = Walzenstuhl
60 = Starre Verbindung
70 = Piezzo-Aktuator
80 = Abstand
90 = Regler

### Ausführung der Erfindung

### Verfahren

Wesentlich für die Erfindung ist die Anwendung des Chill-Roll Schmelzegießverfahi-ens, wie es seit langem bekannt ist (s. z. B. EP 1 117 731 B1 oder EP 1 285 742 A2). Dabei wird ein aus einer Extrusionsdüse austretender Schmelzefilm an eine einzelne Kühlwalze, die Chill-Roll-Walze, angelegt und abgekühlt. Der Schmelzefilm soll dabei besonders bevorzugt nicht oder nur geringfügig, nicht mehr als um den Faktor 5 in Extrusionsrichtung verstreckt werden und keiner aktiven Kühlung ausgesetzt werden, bevor er auf die Chill-Roll-Walze auftrifft. Dies hat den Vorteil, dass kaum molekulare Orientierungen auftreten und die resultierende Folie einen hohen Grad an optischer Isotropie aufweist. Das Chill-Roll Verfahren unterscheidet sich dadurch insbesondere von den so genannten Glättwerksverfahren, bei denen der Schmelzefilm einen von zwei gegenüberliegenden Walzen gebildeten Walzenspalt durchläuft.

Die Erfindung betrifft die Verwendung einer Extrusionsanlage zur Herstellung der erfindungsgemäßen Folie.

Der thermoplastische Kunststoff wird auf einer Extrusionsanlage mit einem Extruder, einer Schmelzepumpe und einer Extrusionsdüse mit einer Austrittsöffnung in Breitschlitzform geschmolzen, gefördert und in Form einer flächigen Schmelzebahn aus der Austrittsöffnung der Extrusionsdüse ausgestoßen. Bevorzugt ist zwischen der Schmelzepumpe und der ExtrusionsdUse ein Schmelzefilter vorgesehen, der Verunreinigungen zurückhält. Die Maschenweite des Filtereinsatzes kann z. B. 5 bis 50 µm, bevorzugt z. B. 10 bis 30 µm betragen.

Das tangentiale Anlegen des Schmetrefilms an die gekühlte Wabre hat den Vorteil, daß Verstreckungen oder Deformationen, die die Qualität des Produkts negativ beeinflussen könnten vermieden oder zumindest gering gehalten werden.

Zwischen dem Austritt aus der Extrusionsdüse und dem Anlegepunkt an der gekühlten Walze (Chill-Roll-Walze) legt der Schmelzefilm einen Abstand bzw. Weg zurück. Über die Breite der Extrusionsdüse und der gekühlten Walze hinweg soll dieser Abstand (im Ruhezustand) natürlich überall nahezu konstant sein, damit keine Verstreckung über die Breite der Schmelzebahn auftritt. Der Abstand in Extrusionsrichtung soll insgesamt möglichst gering gehalten werden. Bevorzugt liegt der Abstand zwischen dem Austrittspunkt für die Schmelze aus der Extrusionsdüse und dem Anlegepunkt an der Chill-Roll-Walze im Ruhezustand im Bereich von 5 bis 500, bevorzugt im Bereich von 10 bis 250, insbesondere im Bereich von 15 bis 150 mm. Im Betriebszustand variieren die Abstände schwingungsbedingt in Bereich von wenigen µm, wie unten weiter ausgeführt wird.

Der Schmelzefilm soll dabei besonders bevorzugt nicht oder nur geringfügig, nicht mehr als um den Faktor 5 in Extrusionsrichtung verstreckt werden und keiner aktiven Kühlung ausgesetzt werden, bevor er auf die Chill-Roll-Walze auftrifft bzw. dort angelegt wird. Dies hat den Vorteil, dass kaum molekulare-Orientierungen auftreten und die resultierende Folie einen hohen Grad an optischer Isotropie aufweist. Das Chill-Roll-Verfahren unterscheidet sich dadurch insbesondere von den so genannten Glättwerksverfahren, bei denen der Schmelzefilm einen von zwei gegenüberliegenden Walzen gebildeten Walzenspalt durchläuft.

Der thermoplastische Kunststoff wird auf einer Extrusionsanlage mit einem Extruder, einer Schmelzepumpe und einer Extrusionsdüse mit einer Austrittsöffnung in Breitschlitzform geschmolzen, gefördert und in Form einer flächigen Schmelzebahn aus der Austrittsöffnung der Extrusionsdüse ausgestoßen.

Bevorzugt ist zwischen der Schmelzepumpe und der Extrusionsdüse ein Schmelzefilter vorgesehen, der Verunreinigungen zurückhält. Die Maschenweite des Filtereinsatzes kann z. B. 5 bis 50 µm, bevorzugt z. B. 10 bis 30 µm betragen.

Die Extrusionsdüse kann weiterhin im Düsenaustrittsbereich in an sich bekannter Weise mit einem Profilwerkzeug ausgestattet werden. Das Profilwerkzeug dient zur Feinregulierung des austretenden Schmelzeprofils, indem ein dünnwandig gestalteter Austrittsbereich unter Druckausübung von Stellelementen, z. B. Bolzen, Dehnbolzen oder Piezotranslatoren, entsprechend verformt wird. Geeignet ist z. B. die Ausführung des Düsenausgangsbereichs als flexible Lippe oder als so genannte "Superflexlippe" (s. z. B. EP-A 367 022) oder als Membran (s. Groß et al. Kunststoffe 84 (1994) 10, S. 1352 - 1358).

Die Schmelzebahn wird an eine einzelne gekühlte Walze, eine so genannte Chill-Roll-Walze angelegt und gekühlt. Die Chill-Roll-Walze kann dabei z. B. eine Temperatur von 100 bis 200 °C, z. B. von 100 bis 130 °C oder von 110 bis 120 °C aufweisen.

### Vermeidung von Schwingungsübertragungen

Den Vorteilen des Chill-Roll-Verfahrens bei der Herstellung einer niedrig orientierten Folie steht als gewichtiger Nachteil gegenüber, dass die erreichbaren Dickentoleranzen sowohl in, als auch quer zur Extrusionsrichtung deutlich schlechter sind, als bei den Glättwerksverfahren. Bei den Glättwerksverfahren bildet sich im Prozeß vor dem Walzenspalt ein kleiner Schmelzevorrat. Dieser Vorrat und der Druck im Walzenspalt führen zu einer Vergleichmässigung der Foliendicke in allen Richtungen.

Prinzipbedingt sind damit die im Chill-Roll-Verfahren üblicherweise erreichbaren Dickentoleranzen wesentlich schlechter.

Der Erfindung liegt die Erkenntnis zugrunde, dass aus dem Bereich des Extruders und insbesondere der Schmelzepumpe Schwingungen auf die Extrusionsdüse übertragen werden können. Diese Schwingungen führen im Betriebszustand zu variierenden Abständen zwischen der Austrittsöffnung der Extrusionsdüse und der Chill-Roll-Walze. Die variierenden Abstände führen ihrerseits zu Stauchungen oder Streckungen der Schmelzebahn, was wiederum zu einer Zunahme der Dickentoleranzen führt.

Der Erfindung liegt weiterhin die Erkenntnis zugrunde, dass die Chill-Röll-Walze durch die eigene Unwucht zu variierenden Abständen zwischen der Austrittsöffnung der Extrusionsdüse und der Chill-Roll-Walze beiträgt. Die variierenden Abstände führen ihrerseits zu Stauchungen oder Streckungen der Schmelzebahn, was wiederum zu einer Zunahme der Dickentoleranzen führt.

Es wird deshalb bevorzugt eine Extrusionsanlage verwendet bzw. eingesetzt, bei der sich der Abstand zwischen der Austrittsöffnung der Extrusionsdüse und der gekühlten Walze (Chill-Roll-Walze) im Betriebszustand um nicht mehr als +/- 50 µm, besonders bevorzugt um nicht mehr als +/- 25, besonders bevorzugt um nicht mehr als +/- 10 µm verändert bzw. zeitlich variiert.

Dies kann z. B. erreicht werden, indem eine gekühlte Walze (Chill-Roll-Walze), die eine Rundlaufgenauigkeit von +/- 10 µm oder darunter, bevorzugt von +/- 5 µm oder darunter, aufweist eingesetzt wird. Durch diese Maßnahme können die Schwingungen in einen Bereich von +/- 25 µm oder weniger verringert werden. Die Verminderung der Schwingungen führen überraschender Weise zu verminderten Dickentoleranzen und vor allem aber zu einer sprunghaft verbesserter Oberflächenqualität der resultierenden Folien in einen Bereich der Laserablenkung von kleiner/gleich 0,8, bevorzugt kleiner gleich 0,5 Winkelminuten.

Für die Zwecke der Erfindung geeignete kühlbare Walzen (Chill-Roll-Walze) mit einer Rundlaufgenauigkeit von +/- 10 µm oder darunter, bevorzugt von +/- 5 µm oder darunter, können in dieser Genauigkeit gefertigt werden und sind bei Herstellern von Teilen für Extrusionsanlagen verfügbar. Die angegebene Rundlaufgenauigkeit bezieht sich auf den eingebauten Zustand bzw. auf den Betriebszustand. Die Walze muss daher sowohl genau gefertigt als auch mit hoher Genauigkeit in der Extrusionsanlage positioniert und zentriert sein.

Der bzw. ein Abstand (im Betriebszustand) bzw. der jeweils minimale oder kürzeste Abstand (im Ruhezustand) zwischen der Austrittsöffnung der Extrusionsdüse und einem Punkt auf der Oberfläche der gekühlten Walze kann z. B. mittels optischer Messsensoren oder durch Laserwegemessung praktisch zwischen beliebig gewählten Messpunkten bestimmt werden. Vorzugsweise wählt man Messpunkte nahe neben der Austrittsöffnung der Extrusionsdüse und von dort aus einen Messpunkt auf der Walzenoberfläche, der die kürzeste Messtrecke im Ruhezustand ergibt. Es kommt dabei nicht auf den Abstand selbst, sondern auf die zeitliche Variation des Abstands im Betriebszustand an. Zweckmäßigerweise wird der Abstand durch zwei temperaturunabhängige Abstands-Sensoren gemessen, die jeweils rechts und links neben der Austrittsöffnung der Extrusionsdüse positioniert sind, so dass sie von dort aus, bevorzugt den jeweils kürzesten Abstand bzw. die kürzesten Abstände (im Ruhezustand) zur Oberfläche der gekühlten Walze erfassen können. Im Betriebszustand wird dann die Variation dieses bzw. dieser Abstände erfasst. Die Werte beider Messsensoren können anschließend rechnerisch gemittelt werden. Die so ermittelten Werte entsprechen der Veränderung des mittleren Abstands zwischen der Austrittsöffnung der Extrusionsdüse und der gekühlten Walze (Chill-Roll-Walze) im Betriebszustand.

Die Begrenzung der zeitlichen Variation bzw. Veränderung des mittleren Abstands zwischen der Austrittsöffnung Extrusionsdüse und der gekühlten Walze (Chill-Roll-Walze) im Betriebszustand kann auf unterschiedliche Weise erreicht werden.

Eine weitere technische Maßnahme kann sein, den Walzenstuhl, der die gekühlte Walze hält (Chill-Roll-Walze), an einem oder mehreren Punkten z. B. über Verstrebungen, z. B. aus Stahl, fest mit der Extrusionsdüse, z. B. durch Verschrauben oder Nieten, zu verbinden. Durch diese einfache Maßnahme werden den mittleren Abstand zwischen der Austrittsöffnung Extrusionsdüse und der gekühlten Walze negativ beeinflussende Schwingungen bereits deutlich reduziert.

Eine weitergehende technische Maßnahme kann sein, den Walzenstuhl, der die gekühlte Walze hält (Chill-Roll-Walze), mit der Extrusionsdüse über mindestens zwei Aktuatoren zu verbinden, wobei die Aktuatoren über einen Regelkreis gesteuert werden, so dass sie aktiv Abstandsänderungen zwischen der Austrittsöffnung der Extrusionsdüse und der gekühlten Walze entgegenwirken. Durch diese Maßnahme werden den mittleren Abstand zwischen der Austrittsöffnung der Extrusionsdüse und der gekühlten Walze negativ beeinflussende Schwingungen nochmals weitergehend reduziert. Die Aktuatoren, z. B. Piezo-Aktuatoren, können z. B. rechts und links neben der Walze installiert werden und an Punkten rechts und links der Austrittöffnung der Extrusionsdüse mit dieser verbunden werden. Es können gegebenenfalls auch noch zusätzliche feste Verstrebungen zwischen dem Walzenstuhl und der Extrusionsdüse angebracht werden.

Die genannten technischen Maßnahmen können einzeln oder bevorzugt in Kombination angewendet werden.

### Schmelzepumpe

Ein gewisser Effekt, wenn auch nicht im Umfang der zuvor beschriebenen Maßnahmen, kann zusätzlich erzielt werden, wenn die Extrusionsanlage zwischen dem Extruder und der Extrusionsdüse eine Schmelzepumpe aufweist. Die Schmelzepumpe bewirkt eine Nivellierung des ansonsten schwankenden Schmelzedrucks aus dem Extruder in die Extrusionsdüse hinein und trägt so ebenfalls zur Verringerung von Schwingungsübertragungen bei.

Bevorzugt wird eine Extrusionsanlage verwendet, bei der die Schmelzepumpe von der Extrusionsdüse zur Vermeidung von Schwingungsübertragungen entkoppelt ist. Die Entkopplung kann mechanisch bewerkstelligt werden, z. B. über flexible, hochtemperaturfeste Leitungen für die Schmelze.

Eine Verminderung oder Vermeidung der Schwingungsübertragung von der Schmelzepumpe auf die Extrusionsdüse hat den Vorteil, dass Folien mit nochmals verminderten Dickentoleranzen und verbesserter Oberflächenqualität erhalten werden können.

### Kantenradius der Austrittsöffnung der Extrusionsdüse

Ein weiteres Merkmal, das in einer bevorzugten Ausführungsform zu geringen Dickentoleranzen der erfindungsgemäßen Folien beitragen kann, ist der Radius der Kanten der Austrittsöffnung der Extrusionsdüse von höchstens 50 µm, bevorzugt von höchstens oder kleiner 30 µm, insbesondere von höchstens oder kleiner 25 µm. Die Radien der Kanten der Austrittsöffnung der Extrusionsdüse weisen bevorzugt über der Breite der Austrittsöffnung eine Ungleichmäßigkeit von höchstens oder kleiner +/- 5 % auf. Die vergleichsweise scharfen und sehr gleichmäßigen Kanten führen vermutlich zu einer besonders guten Ablösung der Schmelzebahn, was zum Erhalt von Folien mit geringen Dickentoleranzen beitragen kann. Bevorzugt weist die Kante bzw. beide Kanten der Austrittsöffnung einen Winkel von 45 bis 100°, üblicherweise von 90°auf.

Die Rauhigkeit der inneren Oberfläche des Düsenlippenbereichs kann die Oberflächenqualität der hergestellten Folien beeinflussen. Die innere Oberfläche des Düsenlippenbereichs ist der Bereich hinter dem Verteilerkanal und einer gegebenenfalls vorhandenen Stauinsel. Die innere Oberfläche des Düsenlippenbereichs reicht, je nach Beschaffenheit der Extrusionsdüse, etwa 0,5 bis 5 cm von der Austrittsöffnung an gemessen ins Innere der Extrusionsdüse hinein. Die innere Oberfläche des Düsenlippenbereichs soll bevorzugt Rautiefen Rₐ nach DIN 4768 von 0,01 µm bis 0,002 µm oder darunter, R_{z} von 0,08µm bis 0,015µm und Rₘₐₓ 0,10µm bis 0,025µm aufweisen.

### Reibungsvermindernde Beschichtungen

Bevorzugt ist die innere Oberfläche des Düsenlippenbereichs der Extrusionsdüse mit einer reibungsvermindernden Beschichtung ausgestattet. Dies hat den Vorteil, dass die Prozesssicherheit, insbesondere im Langzeitbetrieb erhöht wird. Nach längeren Betrieb der Extrusionsanlage, z. B. nach 20 bis 60 Stunden Dauerbetrieb, können sich unerwünschte Ablagerungen im Düsenlippenbereich ausbilden, die Düsenlinien auf der Folienoberfläche verursachen können. Düsenlinien auf der Folie können in manchen Fällen für das Auge sichtbar sein. Man spricht dann auch von Extrusionsstreifen. Besonders problematisch sind aber sehr feine, für das bloße Auge nicht erkennbare Düsenstreifen. Die Folie erscheint dann zunächst optisch einwandfrei. Bei der Verwendung solcher Folien zur Herstellung optischer Datenträger könnte es jedoch infolge der Fehlstellen zu Fehlern beim Auslesen der Daten kommen. Düsenlinien können entscheidend vermindert oder sogar ganz vermieden werden, wenn die innere Oberfläche des Düsenlippenbereichs der Extrusionsdüse mit einer reibungsvermindernden Beschichtung ausgestattet wird. Um die Elastizität des Düsenlippenbereichs nicht zu beeinträchtigen, soll die Beschichtung nicht zu dick sein. Günstig sind Beschichtungen mit einer Gesamtdicke im Bereich von 3 bis 30, bevorzugt von 5 bis 20 µm.

Der Lippenbereich der Düse wird bevorzugt in zerlegbare Elemente unterteilt und ermöglicht somit eine bessere Zugänglichkeit bei der Bearbeitung der inneren Oberfläche.

Der bevorzugte Rautiefenbereich kann durch Polieren oder durch Beschichten der inneren Oberfläche des Düsenlippenbereichs erreicht werden. Gemäß der EP 1 117 731 B1 kann die innere Oberfläche des Düsenlippenbereichs z. B. mit einer Verchromung ausgestattet werden, die zusätzlich noch poliert werden kann.

Die Beschichtung kann bevorzugt aus Ni, CrN, TiCN, TiC, TiAIN, DLC (Diamond-Like-Carbon) oder einer anderen diamantähnlichen Kohlenstoffbeschichtung bestehen. Diese Beschichtungen haben gegenüber einer Chrombeschichtung wie sie in der EP 1 117 731 B1 beschrieben wird, den Vorteil höherer, um bis zu zehnfach verlängerter Standzeiten. Entsprechende Beschichtungen und deren Aufbringung auf Stahloberflächen sind dem Fachmann im Prinzip bekannt z. B. aus US 5,476,134 oder US 4,637,477.

Ein geeignetes Verfahren zur Aufbringung einer entsprechenden Beschichtung auf die innere Oberfläche des Düsenlippenbereichs ist z. B. das "physical vapour deposition"-Verfahren (PVD-Verfahren, s. z. B. US 5,476,134 oder US 4,637,477). Die Beschichtung kann ein- oder bevorzugt mehrlagig ausgeführt sein. Bei der mehrlagigen Beschichtung kann auf den vergleichsweise weichen Stahl bzw. die Stahllegierung der Extrusionsdüse bevorzugt zunächst eine harte Schicht, z. B. eine 10 bis 20 µm dicke Schicht Nickel aufgetragen werden, die dann mit einer noch härteren Schicht, z. B. einer 2 bis 5 µm dicken Schicht TiN, CrN oder DLC überzogen wird. Eine mehrlagige Beschichtung der inneren Oberfläche des Düsenlippenbereichs mit innerer Nickel-Schicht und einer darauf aufgetragenen Schicht aus TiN, CrN oder DLC ist insbesondere für die Extrusion von Folien aus Polycarbonat von Vorteil.

Im Falle der Wahl von Polyethylenterephthalat als thermoplastischem Kunststoff ist insbesondere eine Wolfram-Carbid Beschichtung als reibungsvermindernde Beschichtung für die innere Oberfläche des Düsenlippenbereichs bevorzugt, die auf dem Wege der Plasmabeschichtung aufgebracht werden kann.

Die innere Oberfläche der Extrusionsdüse im Extrusionsdüsenlippenbereich kann metallurgisch oder chemisch verändert oder dotiert sein.

Die innere Oberfläche der Extrusionsdüse im Extrusionsdüsenlippenbereich kann mit einer ein- oder mehrlagigen Beschichtung aus einer Fluorverbindung versehen sein.

### Beheizung des austretenden Schmelzefilms

Bevorzugt wird die Schmelzebahn auf dem Weg zwischen dem Austritt aus der Extrusionsdüse und dem Aufsetzpunkt auf der Chill-Roll-Walze beheizt. Dies hat den Vorteil, dass innere molekulare Spannungen nur vermindert auftreten. Günstig ist es, die Schmelzebahn so zu beheizen, dass sie im oder kurz vor dem Aufsetzpunkt auf die Chill-Roll-Walze eine Temperatur von mindestens 30, mindestens 40, mindestens 50, mindestens 60 oder mindestens 80 °C oberhalb der Glastemperatur des extrudierten Kunststoffs aufweist.

Unter Glastemperatur wird hier insbesondere die midpoint temperature *T*_{mg} nach ISO 11357-2, Punkt 3.3.3, verstanden. Die Messung erfolgt ohne Weichmacherzusatz, bei Restmonomergehalten (REMO) von weniger als 100_{.} ppm, bei einer Aufheizrate von 10 °C/min und unter Stickstoffatmosphäre.

### Einhausung / Inertgasatmosphäre

Bevorzugt wird eine Extrusionsanlage verwendet bzw. eingesetzt, bei der die Schmelzebahn zwischen dem Austritt aus der Extrusionsdüse und dem Aufsetzpunkt auf der Chill-Roll-Walze von einer Einhausung umgeben ist. Dies ermöglicht einerseits eine effektive Beheizung der Schmelzebahn und eröffnet zugleich die Möglichkeit, die Schmelzebahn auf dem Weg zwischen dem Austritt aus der Extrusionsdüse und dem Aufsetzpunkt auf der Chill-Roll-Walze mit einem Inertgas, z. B. Stickstoff, zu umgeben. Letzteres hat den Vorteil, dass Oxidationsvorgänge im Kunststoffmaterial, die zu unerwünschten Verfärbungen oder Trübungen führen können, vermindert oder vermieden werden.

### Folie

Die Erfindung betrifft eine Folie, insbesondere eine extrudierte Folie, aus einem thermoplastischem, bevorzugt einem transparenten thermoplastischen Kunststoff mit einer Dicke von 10 bis 150, bevorzugt 20 bis 120, insbesondere 30 bis 100 µm.

### In-Plane-Doppelbrechung

Die In-Plane-Doppelbrechung (In-plane birefringence) der Folie wird aus dem optischen Gangunterschied berechnet. Der optische Gangunterschied aufgrund der Doppelbrechung eines, bezogen auf die Folienoberfläche senkrecht einfallenden Lichtstrahls kann z. B. nach dem Prinzip der Polarisationsmikroskopie (Polarimeter) bestimmt werden. Die Methodik zur Bestimmung der In-Plane-Doppelbrechung ist dem Fachmann geläufig (s. z. B. ISO 11455).

Die Folie weist eine Doppelbrechung (In-Plane-Doppelbrechung) auf, die bei senkrechter Durchstrahlung einen optischen Gangunterschied von höchstens 25 nm, insbesondere höchstens 20 nm, bevorzugt höchstens 15 nm, bevorzugt höchstens 12, insbesondere höchstens 10 oder höchstens 5 nm verursacht. Die In-Plane-Doppelbrechung kann z. B. 2 bis 10 nm oder 2 bis 5 nm betragen. Folien mit diesen Werten werden als optisch und mechanisch isotrop bzw. nahezu isotrop bezeichnet und eignen sich für optische Anwendungen mit hohen Anforderungen.

### Vertikale Doppelbrechung

Eine erfindungsgemäße extrudierte Folie unterscheidet sich unter anderem von gegossenen Folien (s. z. B. EP 351 886) durch eine deutlich geringere vertikale Doppelbrechung (Vertical Birefringence s. dazu z. B. EP 1 202 261 A1). Die vertikale Doppelbrechung der erfindungsgemäßen Folie beträgt höchstens 0,0004, bevorzugt höchstens 0,0003. Eine geeignete Meßmethode zur Bestimmung der vertikalen Doppelbrechung ist z. B. ausführlich in EP 1 202 261 A1, S. 11, Zeile 44 - S.12, Zeile 24, beschrieben. Das Prinzip beruht im Gegensatz zur In-Plane-Doppelbrechungsmessung auf einem Lichteinfallswinkel von 45°. Die Methodik zur Bestimmung vertikalen Doppelbrechung ist dem Fachmann geläufig.

Ein niedriger Wert in der vertikalen Doppelbrechung ist insbesondere von Vorteil wenn die erfindungsgemäße Folie in optischen Datenträgern verwendet wird. Je höher die numerische Apertur der Laseroptik zur Abtastung des Datenträgers, umso größer ist der Anteil an schräg einfallender Laserstrahlung. Insbesondere bei Optiken mit hoher numerischer Apertur wird das Signal/Rausch-Verhältnis mit zunehmender vertikaler Doppelbrechung schlechter.

### Oberflächenqualität

Die Folie weist überraschenderweise in keinem Bereich der Oberfläche, bezogen auf eine kreisförmige Fläche mit einem Durchmesser von 12 cm, bevorzugt bezogen auf eine Fläche von 1 m², besonders bevorzugt bezogen auf eine Fläche von 10m² eine Ablenkung eines senkrecht einfallenden Lichtstrahls von größer als 0,8 Winkelminuten, bevorzugt nicht mehr als 0,5 Winkelminuten auf.

Insbesondere weist die Folie in keinem Bereich der Oberfläche, bezogen auf eine kreisrunde Fläche mit einem Durchmesser von 12 cm, eine Ablenkung eines senkrecht einfallenden Lichtstrahls von größer als 0,6 bzw. von größer als 0,5 Winkelminuten auf.

Die Messung erfolgt mittels der Registrierung des Ablenkungswinkels, den ein Laserstrahl erfährt, der die Folie durchdringt. Hierzu wird die so genannte Laser-Deflektions-Methode eingesetzt. Über die gesamte Extrusionsbreite wird, mittels eines mit einem Schrittmotor betriebenen Verschiebetisches, die Winkelabweichung gemessen, welche ein Laserstrahl bei senkrechtem Durchstrahlen der Folie erfährt. Um die erfindungsgemäß geforderte Oberflächenqualität der Folie zu verifizieren, können ausgestanzte Stücke mit einer kreisförmige Fläche mit einem Durchmesser von 12 cm oder Abschnitte bzw. Ausschnitte der Folienbahn von jeweils 1 oder 10 m² vermessen werden.

Die Messung der Oberflächenqualität der Folie kann z. B. erfolgen, indem die Winkelabweichung, welche ein Laserstrahl von 632,8 nm bei senkrechtem Durchstrahlen der Folie quer zur Extrusionsrichtung erfährt über die gesamte Extrusionsbreite gemessen wird. Dies kann mittels eines mit einem Schrittmotor betriebenen Verschiebetisches ausgeführt werden. Der Durchmesser des eingesetzten Laserstrahls kann dabei bevorzugt kleiner oder höchstens etwa gleich groß wie die Dimension der zu detektierenden Fehlstellen, z. B. Düsenlinien oder Extrusionsstreifen, sein. Dies ist bei handelsüblichen Laser-Gerätschaften praktisch immer gegeben. Der transmittierte Strahl durchläuft danach zur Vergrößerung des Ablenkungswinkels ein Fernrohr und trifft auf einen positions- und intensitätsempfindlichen digitalen optischen Sensor. Dieser bestimmt den Ort des Zentrums und/oder die Intensität des auf ihn auftreffenden Lichtpunkts und gibt ihn über eine serielle Schnittstelle in x und y - Koordinaten aus. Für die Auswertung von Düsenlinien ist davon nur die y-Komponente relevant.

### Dickentoleranz

Die Folie weist insbesondere eine Dickentoleranz bzw. Unterschiede in der Dicke der Folie, bezogen auf eine kreisförmige Fläche mit einem Durchmesser von 12 cm, von nicht mehr als +/- 1%, bevorzugt nicht mehr als 0,5 % auf. Die prozentuale Abweichung bezieht sich dabei auf das Mittel des maximalen und des minimalen Dickenwertes innerhalb der kreisförmigen Fläche mit einem Durchmesser von 12 cm. Diese Spezifikation stellt sicher, dass die Folie z. B. für die Herstellung von optischen Datenspeichern mit hoher Speicherdichte von z. B. 25 Gigabite (GB) oder mehr geeignet ist. Bezogen auf eine 100 µm dicke Folie beträgt die Dickenabweichung vom Mittelwert demnach nicht mehr als +/-1 µm innerhalb einer kreisförmigen Fläche mit einem Durchmesser von 12 cm.

Die Ermittlung der Dickentoleranz kann durch interferometrische Schichtdickenmessung bestimmt werden, die dem Fachmann bekannt ist.

Für die interferometrische Schichtdickenmessung kann z. B. ein achromatischer Messkopf eingesetzt werden. Die Schichtdickenmessung beruht auf der Überlagerung des an beiden Grenzflächen der Folie reflektierten Lichtes. Bei bekannter Brechzahl des Materials kann aus dem Spektrum des reflektierten Lichtes die Schichtdicke bestimmt werden.

### Kunststoffe

Die Folie besteht aus einem thermoplastischen, bevorzugt aus transparentem, thermoplastischen Kunststoff. Bevorzugt weist die Folie einen Lichttransmissionsgrad für Tageslicht (Normlichtart D65) τ_{D65} s. z. B. DIN 5033/5036 im Bereich von mindestens 60 %, bevorzugt von 65 bis 92 % auf.

Die Folie kann z. B. aus Polymethylmethacrylat-Kunststoff, schlagzäh modifiziertem Polymethylmethacrylat, Polycarbonat-Kunststoff, Polystyrol-Kunststoff, Styrol-Acryl-Nitril-Kunststoff, Polyethylenterephthalat-Kunststoff, glykolmodifiziertem Polyethylenterephthalat-Kunststoff, Polyvinylchlorid-Kunststoff, Polyolefin-Kunststoff, Cycloolefinische Copolymere (COC), PPS-Kunststoff oder PPSU-Kunststoff, Acrylnitril-Butadien-Stryrol (ABS)-Kunststoff oder Mischungen (Blends) verschiedener thermoplastischer Kunststoffe bestehen.

Die Folie besteht bevorzugt aus einem linearen oder verzweigten Polycarbonat mit einem mittleren Molekulargewicht Mw (Gewichtsmittel) von 10.000 bis 45.000, bevorzugt von 12.000 bis 25.000, besonders bevorzugt von 15.000 bis 20.000 besteht.

Die Bestimmung des Molekulargewichts M_{w} (Gewichtsmittel) kann beispielsweise per Gelpermeationschromatographie oder per Streulichtmethode erfolgen (siehe z. B. H. F. Mark et al., Encyclopedia of Polymer Science and Engineering, 2nd. Edition, Vol. 10, Seiten 1 ff., J. Wiley, 1989).

### Verwendungen

Die erfindungsgemäße Folie kann z. B. zum Aufbau von transparenten Schichten in optischen Datenträgern, als Abdeckfolie von optischen Datenträgern, als Abdeckfolie zum Verkratzschutz von optischen Datenträgern, als Trägermaterial für die Informationsschicht von optischen Datenträgern oder als funktionale Folie in Flüssigkristallbildschirmen verwendet werden.

### BEISPIELE

### Beispiel 1

Herstellung einer erfindungsgemäßen Folie durch Chill-Roll-Extrusion einer Polycarbonat-Formmasse mit einem mittleren Molekulargewicht Mw (Gewichtsmittel) von ca. 20.000 (Dalton).

Die Extrusionsanlage besteht aus einem Einschneckenextruder, einer Schmelzepumpe und einer Breitschlitzextrusionsdüse mit einer Austrittsöffnung von 680 mm x 0,4 mm. Die Breitschlitzextrusionsdüse ist als Superflexlippe (s. EP-A 367 022) ausgeführt.

Die innere Oberfläche der Extrusionsdüse im Lippenbereich ist poliert, so dass eine Rauhigkeit Ra von 0,002 µm, Rz von 0,015µm und Rmax von 0,025µm erreicht wird. Die innere Oberfläche der Extrusionsdüse wird mit einer Duplex-Beschichtung von 15µm Nickel und 5µm CrN versehen.

Der Radius der Düsenlippe im Austrittsbereich beträgt zwischen ca. 100 und 200 µm und besitzt eine Radius-Gleichmäßigkeit von +/- 50 µm über die Breite.

Im Abstand von 25 mm zur Austrittsöffnung der Breitschlitzextrusionsdüse ist eine Chill-Roll-Walze mittig positioniert. Die Walze hat einen Durchmesser von 400 mm und eine Breite von 700 mm. Die Walzenoberfläche weist eine Rauhigkeit Ra <= 0,003µm, und Rmax <0,25µm gemessen nach DIN 4768, auf. Die Walze besitzt eine Rundlaufgenauigkeit <= 3µm.

Die Extrusionsdüse ist mit dem Walzenstuhl an zwei Punkten rechts und links der Austrittsöffnung der Extrusionsdüse über Stahlprofilträger mit einem Querschnitt von 5 cm x 1 cm fest verbunden.

Die Temperatur der Chill-Roll Walze wird zwischen 100°C und 130°C eingestellt, bevorzugt 110°C bis 120°C.

Die Temperatur des Schmelzestroms beträgt ca. 240°C. Der Schmelzefilm legt sich annähernd tangential an die Walzenoberfläche an und umschlingt die Walzen um ca. 180°.

Die Strecke zwischen dem Austritt der Schmelze aus der Düse und dem Anlegepunkt an die Chill-Roll-Walze ist eingehaust, die innere Temperatur beträgt ca. 120°C. Diese Einhausung kann beheizt werden oder unter Schutzgasatmosphäre, z.B. aufgeheiztem und gefiltertem (Reinraumklasse 100) Stickstoff, gefüllt sein.

Nach Umschlingung weiterer Walzen wird die Dicke der Folienbahn durch ein traversierend angeordnetes, berührungsloses Meßsystem ermittelt und mittels elektronisch verarbeiteter Informationen die Schmelzeverteilung der Düse mittels eines Dehnbolzensystems über die Breite geregelt.

### Vergleichsbeispiel 1

Das Vergleichsbeispiel 1 unterscheidet sich von Beispiel 1 dadurch, dass keine feste Verbindung zwischen dem Walzenstuhl und der Extrusionsdüse vorliegt.

### Beispiel 2

Das Beispiel 2 unterscheidet sich von Beispiel 1 dadurch, dass die Extrusionsdüse mit dem Walzenstuhl an zwei Punkten rechts und links der Austrittsöffnung der Extrusionsdüse über Piezo-Aktuatoren verbunden ist. Die Piezo-Aktuatoren werden über einen, in die optische Abstandsmessung integrierten Regelkreis gesteuert und wirken Abstandsänderungen zwischen der Austrittsöffnung Extrusionsdüse und der gekühlten Walze (Chill-Roll-Walze) aktiv entgegen.

### Beispiel 3

Das Beispiel 3 unterscheidet sich von Beispiel 2 dadurch, dass der Radius der Düsenlippe im Austrittsbereich ca. 25 µm beträgt und eine Radius-Gleichmäßigkeit von +/- 1 µm über die Breite aufweist (Scharfe Kante).

Die relevanten Messgrößen der im Vergleichsbeispiel 1 und in den Beispielen 1 bis 3 erhaltenen Folien werden anhand ausgestanzter kreisrunder Flächenstücke mit einem Durchmesser von 12 cm bestimmt und sind der folgenden Tabelle zusammengefasst.

| | Vergleichsbeispiel 1 | Beispiel 1 | Beispiel 2 | Beispiel 3 |
|---|---|---|---|---|
| Feste Verbindung zw. Düse und Gießwalze | - | + | + | + |
| Feste Verbindung+ Aktuatoren | - | - | + | + |
| Scharfe Kante | - | - | - | + |
| Foliendicke [Mittelwert in µm] | 90 | 90 | 90 | 90 |
| Schwingungen zw. Düse und Gießwalze [+-µm] | 60 | 24 | 5 | 4 |
| Optischer Gangunterschied (In-Plane) [Mittelwert in nm] | 12 | 9 | 8 | 10 |
| Laserablenkung [Winkeiminuten] | 0,9 | 0.5 | 0,5 | 0,4 |
| Dickentoleranz Ø 12com [%] | 2 | 0,9 | 0,5 | 0,3 |
| Vertikale Doppelbrechung | 0,0003 | 0,0003 | 0,00029 | 0,00025 |

| | | | | |
|---|---|---|---|---|
| (- : ohne, + mit) | | | | |

## Patentansprüche

1. Verwendung einer Extrusionsanlage zur Herstellung einer Folie aus thermoplastischem Kunststoff, wobei der thermoplastische Kunststoff auf dieser Extrusionsanlage, enthaltend einen Extruder, eine Extrusionsdüse (10) mit einer Austrittsöffnung in Breitschlitzform und eine Chill-Roll-Walze (30), die an einem Walzenstuhl (50) befestigt ist, geschmolzen und gefördert wird und in Form einer flächigen Schmelzebahn (20) aus der Austrittsöffnung der Extrusionsdüse austritt und die Schmelzebahn an die Chill-Roll-Walze (30) angelegt und gekühlt wird,
**dadurch gekennzeichnet, dass**
eine Extrusionsanlage verwendet wird, bei der der Abstand (80) zwischen der Austrittsöffnung der Extrusionsdüse (10) und der Oberfläche der Chill-Roll-Walze (30) im Betriebszustand um nicht mehr als +/- 50 µm variiert.

2. Verwendung einer Extrusionsanlage nach Anspruch 1 enthaltend eine Chill-Roll-Walze (30), **dadurch gekennzeichnet, dass** die Chill-Roll-Walze (30) eine Rundlaufgenauigkeit von +/- 10 µm oder weniger aufweist.

3. Verwendung einer Extrusionsanlage nach Anspruch 1 oder 2 enthaltend eine Chill-Roll- Walze (30), **dadurch gekennzeichnet, dass** die Chill-Roll-Walze (30) an einem Walzenstuhl (50) befestigt ist, der mit der Extrusionsdüse fest verbunden ist (60).

4. Verwendung einer Extrusionsanlage nach einem oder mehreren der Ansprüche 1 bis 3 enthaltend eine Chill-Roll-Walze (30), **dadurch gekennzeichnet, dass** die Chill-Roll-Walze (30) an einem Walzenstuhl (50) befestigt ist, der mit der Extrusionsdüse (10) über mindestens zwei Aktuatoren (70) verbunden ist, wobei die Aktuatoren (70) über einen Regelkreis gesteuert werden (90), so dass sie Abstandsänderungen zwischen der Austrittsöffnung der Extrusionsdüse (10) und der gekühlten Walze (20) aktiv entgegenwirken.

5. Verwendung einer Extrusionsanlage nach einem oder mehreren der Ansprüche 1 bis 4 enthaltend eine Extrusionsdüse (10), **dadurch gekennzeichnet, dass** die Kanten der Austrittsöffnung der Extrusionsdüse (10) einen Radius von höchstens 50 µm bei einer Ungleichmäßigkeit von nicht mehr als +/- 5 % aufweisen.

6. Verwendung einer Extrusionsanlage nach einem oder mehreren der Ansprüche 1 bis 5, **dadurch gekennzeichnet, dass** die Extrusionsanlage zwischen dem Extruder und der Extrusionsdüse (10) eine Schmelzepumpe aufweist.

7. Verwendung einer Extrusionsanlage nach einem oder mehreren der Ansprüche 1 bis 6 enthaltend eine Extrusionsdüse (10), **dadurch gekennzeichnet, dass** die innere Oberfläche des Düsenlippenbereichs der Extrusionsdüse (10) mit einer reibungsvermindernden Beschichtung ausgestattet ist.

8. Verwendung einer Extrusionsanlage nach Anspruch 7, **dadurch gekennzeichnet, dass** die Beschichtung der inneren Oberfläche der Extrusionsdüse (10) aus einer ein- oder mehrlagigen, gegebenenfalls modifizierten Beschichtung aus Ni, CrN, TiCN, TiC, TiAIN, DLC oder einer diamantähnlichen Kohlenstoffbeschichtung besteht

9. Verwendung einer Extrusionsanlage nach Anspruch 7 oder 8, **dadurch gekennzeichnet, dass** die innere Oberfläche der Extrusionsdüse (10) im Extrusionsdüsenlippenbereich metallurgisch oder chemisch verändert oder dotiert ist.

10. verwindung einer Extrusionsanlage nach Anspruch 7, **dadurch gekennzeichnet, dass** die innere Oberfläche der Extrusionsdüse (10) im Extrusionsdüsenlippenbereich mit einer ein- oder mehrlagigen Beschichtung aus einer Fluorverbindung versehen ist.

11. Verwendung einer Extrusionsanlage nach einem oder mehreren der Ansprüche 1 bis 10, **dadurch gekennzeichnet, dass** die Schmelzebahn (20) auf dem Weg zwischen dem Austritt aus der Extrusionsdüse (10) und dem Aufsetzpunkt auf der Chill-Roll-Walze (30) beheizt wird.

12. Verwendung einer Extrusionsanlage nach einem oder mehreren der Ansprüche 1 bis 11, **dadurch gekennzeichnet, dass** eine Extrusionsanlage verwendet wird, bei der die Schmelzebahn (20) zwischen dem Austritt aus der Extrusionsdüse (10) und dem Aufsetzpunkt auf der Chill-Roll-Walze (30) von einer Einhausung umgeben ist.

13. Verwendung einer Extrusionsanlage nach Anspruch 12, **dadurch gekennzeichnet, dass** die Schmelzebahn (20) auf dem Weg zwischen dem Austritt aus der Extrusionsdüse (10) und dem Aufsetzpunkt auf der Chill-Roll-Walze (30) mit einem Inertgas umgeben wird.

14. Verwendung einer Extrusionsanlage nach einem oder mehreren der Ansprüche 1 bis 13, **dadurch gekennzeichnet, dass** die innere Oberfläche des Düsenlippenbereichs Rautiefen Rₐ nach DIN 4768 von 0,01 µm bis 0,002 µm oder darunter, R_{z} von 0,08µm bis 0,015µm und Rₘₐₓ 0,10µm bis 0,025µm aufweist.

15. Folie aus einem thermoplastischem Kunststoff mit einer Dicke von 10 bis 150 µm und einer In-Plane-Doppelbrechung, die bei senkrechter Durchstrahlung einen optischen Gangunterschied von höchstens 25 nm verursacht,
**dadurch gekennzeichnet, dass**
die Folie nach einem Verfahren unter Verwendung einer Extrusionsanlage gemäß einem oder mehreren der Ansprüche 1 bis 14 hergestellt ist und in keinem Bereich der Oberfläche, bezogen auf eine kreisrunde Fläche mit einem Durchmesser von 12 cm, eine Ablenkung eines senkrecht einfallenden Lichtstrahls von größer als 0,8 Winkelminuten aufweist, dass die vertikale Doppelbrechung der Folie höchstens 0,0004 beträgt, und dass die Folie eine Dickentoleranz, bezogen auf eine kreisrunde Fläche mit einem Durchmesser von 12 cm, von nicht mehr als +/-1 % aufweist.

16. Folie nach Anspruch 15, **dadurch gekennzeichnet, dass** sie aus einem transparenten thermoplastischen Kunststoff besteht.

17. Folie nach Anspruch 16, **dadurch gekennzeichnet, dass** sie aus Polymethylmethacrylat-Kunststoff, schlagzäh modifiziertes Polymethylmethacrylat, Polycarbonat-Kunststoff, Polystyrol-Kunststoff, Styrol-Acryl-Nitril-Kunststoff, Polyethylenterephthalat-Kunststoff, glykolmodifiziertem Polyethylenterephthalat-Kunststoff, Polyvinylchlorid-Kunststoff, Polyolefin-Kunststoff, Cycloolefinische Copolymere (COC), PPS-Kunststoff oder PPSU-Kunststoff, Acrylnitril-Butadien-Stryrol (ABS)-Kunststoff oder Mischungen (Blends) verschiedener thermoplastischer Kunststoffe besteht.

18. Folie nach einem oder mehreren der Ansprüche 15 bis 17, **dadurch gekennzeichnet, dass** sie aus einem linearen oder verzweigten Polycarbonat mit einem mittleren Molekulargewicht Mw von 10.000 bis 45.000 besteht.

19. Verwendung einer Folie nach einem oder mehreren der Ansprüche 15 bis 18 zum Aufbau von transparenten Schichten in optischen Datenträgern, als Abdeckfolie von optischen Datenträgern, als Abdeckfolie zum Verkratzschutz von optischen Datenträgern, als Trägermaterial für die Informationsschicht von optischen Datenträgern oder als funktionale Folie in Flüssigkristallbildschirmen.

## Claims

1. Use of an extrusion system for production of a foil composed of thermoplastic, where the thermoplastic is melted in said extrusion system, comprising an extruder, an extrusion die (10) with a discharge orifice in the form of a slot, and a chill roll (30) secured to a roll frame (50), and is conveyed onward, and emerges in the form of a sheet-like melt web (20) from the discharge orifice of the extrusion die, and the melt web is applied to the chill roll (30) and is cooled,
**characterized in that**
the distance (80) between the discharge orifice of the extrusion die (10) and the surface of the chill roll (30) in the extrusion system used varies by not more than +/- 50 µm in the operating condition.

2. Use of an extrusion system according to Claim 1 containing a chill roll (30), **characterized in that** the rotation tolerance of the chill roll (30) is +/- 10 µm or less.

3. Use of an extrusion system according to Claim 1 or 2 containing a chill roll (30), **characterized in that** the chill roll (30) has been secured to a roll frame (50) which has solid connection (60) to the extrusion die.

4. Use of an extrusion system according to one or more of Claims 1 to 3 containing a chill roll (30), **characterized in that** the chill roll (30) has been secured to a roll frame (50) connected to the extrusion die (10) by way of at least two actuators (70), the actuators (70) being controlled (90) by way of a control circuit so that they actively counteract changes in distance between the discharge orifice of the extrusion die (10) and the cooled roll (30).

5. Use of an extrusion system according to one or more of Claims 1 to 4 containing an extrusion die (10), **characterized in that** the radius of the edges of the discharge orifice of the extrusion die (10) is at most 50 µm, with non-uniformity of not more than +/- 5%.

6. Use of an extrusion system according to one or more of Claims 1 to 5, **characterized in that** the extrusion system has a melt pump between the extruder and the extrusion die (10).

7. Use of an extrusion system according to one or more of Claims 1 to 6 containing an extrusion die (10), **characterized in that** the inner surface of the die lip region of the extrusion die (10) has been equipped with a friction-reducing coating.

8. Use of an extrusion system according to Claim 7, **characterized in that** the coating of the inner surface of the extrusion die (10) is composed of a single- or multilayer, if appropriate modified coating composed of Ni, CrN, TiCN, TiC, TiAlN, DLC or of a diamond-like carbon coating.

9. Use of an extrusion system according to Claim 7 or 8, **characterized in that** the inner surface of the extrusion die (10) in the extrusion die lip region has been metallurgically or chemically altered or doped.

10. Use of an extrusion system according to Claim 7, **characterized in that** the inner surface of the extrusion die (10) in the extrusion die lip region has been provided with a single- or multilayer coating composed of a fluorine compound.

11. Use of an extrusion system according to one or more of Claims 1 to 10, **characterized in that** the melt web (20) is heated on its way from the exit from the extrusion die (10) to the point of application to the chill roll (30).

12. Use of an extrusion system according to one or more of Claims 1 to 11, **characterized in that** use is made of an extrusion system in which a housing surrounds the melt web (20) between the exit from the extrusion die (10) and the point of application to the chill roll (30).

13. Use of an extrusion system according to Claim 12, **characterized in that**, in the path between discharge from the extrusion die (10) and the point of application to the chill roll (30), the melt web (20) is surrounded by an inert gas.

14. Use of an extrusion system according to one or more of Claims 1 to 13, **characterized in that** the inner surface of the die lip region has roughness depths Rₐ to DIN 4768 of from 0.01 µm to 0.002 µm or below, R_{z} of from 0.08 µm to 0.015 µm and Rₘₐₓ from 0.10 µm to 0.025 µm.

15. Foil composed of a thermoplastic with a thickness of from 10 to 150 µm and with an in-plane birefringence which causes an optical path difference of at most 25 nm when radiation passes through the material perpendicularly,
**characterized in that**
the foil is produced by a process using an extrusion system according to one or more of Claims 1 to 14 and there is no region of the surface, based on a circular area whose diameter is 12 cm, that deflects a perpendicularly incident light beam by more than 0.8 angular minutes, **in that** the vertical birefringence of the foil is at most 0.0004, and **in that** the foil has a thickness tolerance, based on a circular area whose diameter is 12 cm, of not more than +/- 1%.

16. Foil according to Claim 15, **characterized in that** it is composed of a transparent thermoplastic.

17. Foil according to Claim 16, **characterized in that** it is composed of polymethyl methacrylate plastic, impact-modified polymethyl methacrylate, polycarbonate plastic, polystyrene plastic, styrene-acrylonitrile plastic, polyethylene terephthalate plastic, glycol-modified polyethylene terephthalate plastic, polyvinyl chloride plastic, polyolefin plastic, cycloolefinic copolymers (COCs), PPS plastic or PPSU plastic, acrylonitrile-butadiene-styrene (ABS) plastic or a mixture (blend) of various thermoplastics.

18. Foil according to one or more of Claims 15 to 17, **characterized in that** it is composed of a linear or branched polycarbonate whose average molecular weight Mw is from 10 000 to 45 000.

19. Use of a foil according to one or more of Claims 15 to 18 for construction of transparent layers in optical data carriers, as a protective covering foil for optical data carriers, as protective covering foil for scratch protection for optical data carriers, as carrier material for the information layer of optical data carriers or as functional foil in liquid crystal display screens.

## Revendications

1. Utilisation d'une unité d'extrusion pour la fabrication d'un film en plastique thermoplastique, le plastique thermoplastique étant fondu et transporté dans cette unité d'extrusion, qui contient une extrudeuse, une buse d'extrusion (10) ayant une ouverture de sortie sous la forme d'une fente large et un cylindre refroidisseur (30) attaché à un broyeur à cylindres (50), et sortant de l'ouverture de sortie de la buse d'extrusion sous la forme d'une bande de masse fondue plane (20), et la bande de masse fondue étant placée sur le cylindre refroidisseur (30) et refroidie, **caractérisée en ce qu'**une unité d'extrusion est utilisée, dont la distance (80) entre l'ouverture de sortie de la buse d'extrusion (10) et la surface du cylindre refroidisseur (30) ne varie pas de plus de ± 50 µm à l'état de fonctionnement.

2. Utilisation d'une unité d'extrusion selon la revendication 1 contenant un cylindre refroidisseur (30), **caractérisée en ce que** le cylindre refroidisseur (30) présente une précision de cylindricité de ± 10 µm ou moins.

3. Utilisation d'une unité d'extrusion selon la revendication 1 ou 2 contenant un cylindre refroidisseur (30), **caractérisée en ce que** le cylindre refroidisseur (30) est attaché à un broyeur à cylindres (50) qui est relié de manière fixe avec la buse d'extrusion (60).

4. Utilisation d'une unité d'extrusion selon une ou plusieurs des revendications 1 à 3 contenant un cylindre refroidisseur (30), **caractérisée en ce que** le cylindre refroidisseur (30) est attaché à un broyeur à cylindres (50) qui est relié avec la buse d'extrusion (10) par le biais d'au moins deux actionneurs (70), les actionneurs (70) étant commandés par un circuit de réglage (90), de manière à contrer activement les modifications de la distance entre l'ouverture de sortie de la buse d'extrusion (10) et le cylindre refroidi (30).

5. Utilisation d'une unité d'extrusion selon une ou plusieurs des revendications 1 à 4 contenant une buse d'extrusion (10), **caractérisée en ce que** les bords de l'ouverture de sortie de la buse d'extrusion (10) présentent un rayon d'au plus 50 µm avec une irrégularité inférieure ou égale à ± 5 %.

6. Utilisation d'une unité d'extrusion selon une ou plusieurs des revendications 1 à 5, **caractérisée en ce que** l'unité d'extrusion comprend une pompe de masse fondue entre l'extrudeuse et la buse d'extrusion (10).

7. Utilisation d'une unité d'extrusion selon une ou plusieurs des revendications 1 à 6 contenant une buse d'extrusion (10), **caractérisée en ce que** la surface intérieure de la zone de lèvres de la buse d'extrusion (10) est équipée d'un revêtement qui réduit les frottements.

8. Utilisation d'une unité d'extrusion selon la revendication 7, **caractérisée en ce que** le revêtement de la surface intérieure de la buse d'extrusion (10) est constitué d'un revêtement mono- ou multicouche, éventuellement modifié, de Ni, CrN, TiCN, TiC, TiAlN, DLC ou d'un revêtement de carbone de type diamant.

9. Utilisation d'une unité d'extrusion selon la revendication 7 ou 8, **caractérisée en ce que** la surface intérieure de la buse d'extrusion (10) dans la zone de lèvres de la buse d'extrusion est modifiée ou dopée métallurgiquement ou chimiquement.

10. Utilisation d'une unité d'extrusion selon la revendication 7, **caractérisée en ce que** la surface intérieure de la buse d'extrusion (10) dans la zone de lèvres de la buse d'extrusion est munie d'un revêtement mono- ou multicouche à base d'un composé de fluor.

11. Utilisation d'une unité d'extrusion selon une ou plusieurs des revendications 1 à 10, **caractérisée en ce que** la bande de masse fondue (20) est chauffée entre la sortie de la buse d'extrusion (10) et le point de positionnement sur le cylindre refroidisseur (30).

12. Utilisation d'une unité d'extrusion selon une ou plusieurs des revendications 1 à 11, **caractérisée en ce qu'**une unité d'extrusion est utilisée, selon laquelle la bande de masse fondue (20) est entourée par un boîtier entre la sortie de la buse d'extrusion (10) et le point de positionnement sur le cylindre refroidisseur (30).

13. Utilisation d'une unité d'extrusion selon la revendication 12, **caractérisée en ce que** la bande de masse fondue (20) est entourée par un gaz inerte entre la sortie de la buse d'extrusion (10) et le point de positionnement sur le cylindre refroidisseur (30).

14. Utilisation d'une unité d'extrusion selon une ou plusieurs des revendications 1 à 13, **caractérisée en ce que** la surface intérieure de la zone de lèvres de la buse présente des profondeurs de rugosité Rₐ selon DIN 4768 de 0,01 µm à 0,002 µm ou moins, R_{z} de 0,08 µm à 0,015 µm et Rₘₐₓ de 0,10 µm à 0,025 µm.

15. Film en un plastique thermoplastique ayant une épaisseur de 10 à 150 µm et une biréfringence dans le plan qui cause, lors d'une exposition à un rayonnement perpendiculaire, une différence de chemin optique d'au plus 25 nm, **caractérisé en ce que** le film est fabriqué par un procédé utilisant une unité d'extrusion selon une ou plusieurs des revendications 1 à 14 et ne présente dans aucune zone de la surface, relative à une surface circulaire d'un diamètre de 12 cm, de déflexion d'un rayon lumineux appliqué perpendiculairement supérieure à 0,8 minutes d'arc, **en ce que** la biréfringence verticale du film est d'au plus 0,0004 et **en ce que** le film présente une tolérance d'épaisseur, relative à une surface circulaire d'un diamètre de 12 cm, inférieure ou égale à ± 1 %.

16. Film selon la revendication 15, **caractérisé en ce qu'**il est constitué d'un plastique thermoplastique transparent.

17. Film selon la revendication 16, **caractérisé en ce qu'**il est constitué d'un plastique de polyméthacrylate de méthyle, d'un polyméthacrylate de méthyle à résistance aux impacts modifiée, d'un plastique de polycarbonate, d'un plastique de polystyrène, d'un plastique de styrène-acrylonitrile, d'un plastique de polyéthylène téréphtalate, d'un plastique de polyéthylène téréphtalate modifié par du glycol, d'un plastique de polychlorure de vinyle, d'un plastique de polyoléfine, de copolymères cyclooléfiniques (COC), d'un plastique de PPS ou d'un plastique de PPSU, d'un plastique d'acrylonitrile-butadiène-styrène (ABS) ou de mélanges de différents plastiques thermoplastiques.

18. Film selon une ou plusieurs des revendications 15 à 17, **caractérisé en ce qu'**il est constitué d'un polycarbonate linéaire ou ramifié ayant un poids moléculaire moyen Mw de 10 000 à 45 000.

19. Utilisation d'un film selon une ou plusieurs des revendications 15 à 18 pour la formation de couches transparentes dans des supports de données optiques, en tant que film de revêtement de supports de données optiques, en tant que film de revêtement pour la protection contre les éraflures de supports de données optiques, en tant que matériau support pour la couche d'informations de supports de données optiques ou en tant que film fonctionnel dans des écrans à cristaux liquides.
